# FASCICULE DE BREVET EUROPEEN

(11) **EP 1 261 426 B1**
(45) Date de publication et mention de la délivrance du brevet: **31.12.2008**
(21) Numéro de dépôt: 01915450.9
(22) Date de dépôt: 06.03.2001
(51) Int. Cl.: B01L 3/00

(54) **CARTE D'ANALYSE ET PROCEDE DE SA MISE EN OEUVRE**
TESTKARTE UND VERFAHREN IHRER VERWENDUNG
TEST SAMPLE CARD AND METHOD OF ITS USE

(30) Priorité: 07.03.2000 FR 0002931
(43) Date de publication de la demande: 04.12.2002
(73) Titulaire: BIO MERIEUX, 69280 Marcy l'Etoile (FR)
(72) Inventeur: COLIN, Bruno, F-69280 Marcy l'Etoile (FR)
(74) Mandataire: Guerre, Dominique
(86) Numéro de dépôt international: PCT/FR2001/000668
(87) Numéro de publication internationale: WO 2001/066250

(56) Documents cités:
- EP-A- 0 381 501
- US-A- 4 253 846
- US-A- 5 302 515
- US-A- 5 843 380
- US-A- 6 015 531

## Description

La présente invention concerne un procédé de mise en oeuvre d'une carte d'analyse comportant au moins un circuit fluidique, constituant un réseau de canaux et/ou de compartiments, pour le transfert d'un liquide à l'intérieur de la carte, à l'aide d'un fluide hydrophobe. L'invention concerne également la carte d'analyse.

L'état de la technique est constitué par le document US 5 554 339 qui décrit un échantillonneur pour délivrer de faibles volumes de liquide par l'intermédiaire d'une aiguille. La surface extérieure de l'aiguille est recouverte d'un fluide hydrophobe qui diminue l'adhésion de la goutte de liquide à délivrer sur l'aiguille et ainsi permet d'augmenter la précision sur les faibles volumes. Le même principe est décrit dans le brevet US 5 763 278 pour un automate de pipettage de faibles volumes avec une aiguille.

Les documents US 4 253 846 et US 5 841 039 décrivent un appareil pour l'analyse automatisée d'échantillons liquides dans lequel, un segment de liquide de l'échantillon, séparé par un segment d'air circule dans les conduits de l'appareil par l'intermédiaire d'un fluide porteur hydrophobe non miscible avec l'échantillon, généralement aqueux. Le rôle de ce fluide porteur est d'envelopper chaque segment d'échantillon pour les isoler entre eux et ainsi de diminuer la contamination inter échantillon.

Des cartes d'analyse avec des circuits fluidiques utilisables sur des automates ont été décrites par exemple dans les brevets ou demandes de brevet de la demanderesse US 5 843 380 ou FR 2 749 663. Ces cartes d'analyse sont le plus souvent des consommables jetables. Il est particulièrement important de maîtriser les coûts de fabrication de telles cartes pour des raisons économiques. Pour les mêmes raisons économiques et parce que les analyses biologiques mettent en jeu des volumes de plus en plus petits de l'ordre du nanolitre à quelques dizaines de microlitres, la miniaturisation des cartes, et donc des circuits fluidiques à l'intérieur de ces cartes, est un enjeu important. Un des problèmes essentiels du transfert de liquide dans ce type de carte est lié à la formation des bulles ou mousse qui interdisent le positionnement précis du liquide dans une zone déterminée et pénalisent l'analyse.

Ce phénomène est encore accentué par la présence dans les liquides biologiques, qui sont déplacés à l'intérieur de ces cartes, d'agents tensioactifs ou détergents comme le SDS (Sodium Dodecyl Sulfate), le Tween^{®} ou le Triton^{®}.

En théorie, il est possible de réaliser les cartes dont le circuit fluidique ne comporte aucune discontinuité de forme, notamment par l'utilisation d'arrondis, qui minimisent ce phénomène, mais le coût de fabrication de ces cartes est prohibitif. En pratique, les cartes d'analyse obtenues par moulage présentent, dans un premier temps du processus de fabrication, un circuit fluidique assimilable à une cavité et ouvert sur l'extérieur avec au moins une arête vive à la surface qui correspond à l'empreinte de la pièce qui a créé la cavité. Pour assurer l'étanchéité de la carte, ces cartes sont scellées soit par un film adhésif (voir par exemple les demandes de brevet ou brevets de la demanderesse US 5 843 380 ou FR 2 749 663), soit la carte est fabriquée en deux parties et ces deux parties sont assemblées par exemple par collage ou thermosoudure (voir par exemple WO 95/33846). Il y a création d'espaces capillaires et d'arêtes vives qui favorisent la formation de bulles (ou mousse) et la rétention de liquide par la création de volumes morts.

La présente invention résout les problèmes mentionnés ci-dessus en proposant une technique simple applicable à des cartes d'analyse.

Notamment, la présente invention concerne un procédé de mise en oeuvre d'une carte d'analyse comportant au moins un circuit fluidique, constituant un réseau de canaux et/ou de compartiments, pour le transfert d'au moins un liquide biologique depuis au moins une entrée vers au moins une sortie dans laquelle l'on injecte un fluide hydrophobe dans tout ou partie du réseau de ladite carte, préalablement au transfert du ou des liquides biologiques, ledit fluide hydrophobe remplissant les espaces capillaires formés par les angles du réseau de canaux et/ou compartiments de la carte et évitant la formation de bulles et/ou de volumes morts lors du transfert du liquide biologique.

L'utilisation d'une telle carte concerne l'analyse d'un ou plusieurs échantillons liquides différents dans lequel on cherche à identifier un ou plusieurs analytes selon tous les processus simples ou complexes d'analyse mettant en jeu un ou plusieurs réactifs différents selon la nature chimique, physique ou biologique du ou des analytes recherchés. Les principes techniques définis ci-après ne sont pas limités à un analyte particulier, la seule condition requise étant que l'analyte soit distribué dans l'échantillon à analyser en suspension ou en solution. En particulier, le processus d'analyse mis en oeuvre peut être effectué, sous forme homogène ou hétérogène ou mixte.

Un mode particulier, non limitatif d'une telle carte, concerne l'analyse biologique, d'un ou plusieurs ligands, nécessitant pour leur détection et/ou leur quantification l'utilisation d'un ou plusieurs anti-ligands. Par ligand on entend toute espèce biologique comme par exemple, un antigène, un fragment d'antigène, un peptide, un anticorps, un fragment d'anticorps, un haptène, un acide nucléique, un fragment d'acide nucléique, une hormone, une vitamine. Un exemple d'application des techniques d'analyse concerne les immunoessais, quel que soit leur format, par analyse directe ou par compétition. Un autre exemple d'application concerne la détection et/ou la quantification d'acides nucléiques comprenant l'ensemble des opérations nécessaires à cette détection et/ou cette quantification à partir d'un prélèvement quelconque contenant les acides nucléiques cibles. Parmi ces différentes opérations on peut citer la lyse, la fluidification, la concentration, les étapes d'amplification enzymatique des acides nucléiques, les étapes de détection incorporant une étape d'hybridation utilisant par exemple une puce à ADN ou une sonde marquée.

Par fluide hydrophobe, on entend un liquide hydrophobe comme par exemple les hydrocarbures fluorés ou perfluorés, les huiles silylées, comme des huiles diméthyl siloxane à terminaison triméthylsilyle. De préférence, le fluide hydrophobe est une huile de faible viscosité cinématique. Par faible viscosité cinématique on entend de préférence comprise entre 1 centistoke et 100 centistokes avantageusement entre 4 centistokes et 50 centistokes à 40°C. Cette échelle de viscosité permet à l'huile d'assurer sa fonction de remplissage des espaces capillaires mais sans boucher le circuit fluidique et donc permettre la mise en oeuvre de l'analyse.

La tension superficielle est un autre paramètre du fluide hydrophobe à prendre en considération par l'homme du métier en fonction du type de matériau utilisé pour la carte d'analyse.

La viscosité cinématique est mesurée à l'aide d'un tube Cannon-Fenske calibré selon les normes ASTM D-445, IP71 et ISO-3104 à 40 °C.

Par espace capillaire, on entend les discontinuités de forme à l'intérieur de la carte et qui peuvent conduire à la rétention de liquide et à la formation de bulles et en particulier, les formes anguleuses avec un angle compris entre 0 et 180° et notamment entre 0 et 90°.

Par liquide biologique, on entend tous les liquides nécessaires à la mise en oeuvre de l'analyse. Ceci inclut : le prélèvement biologique qui contient le ou les analytes à doser et qui est préalablement traité comme par une étape de lyse, de fluidification, de centrifugation, de préculture par exemple sur milieu solide, qui peut être dilué dans un tampon approprié ou utilisé non traité comme dans le cas du sérum ; les tampons de lavage, d'élution, de réaction.

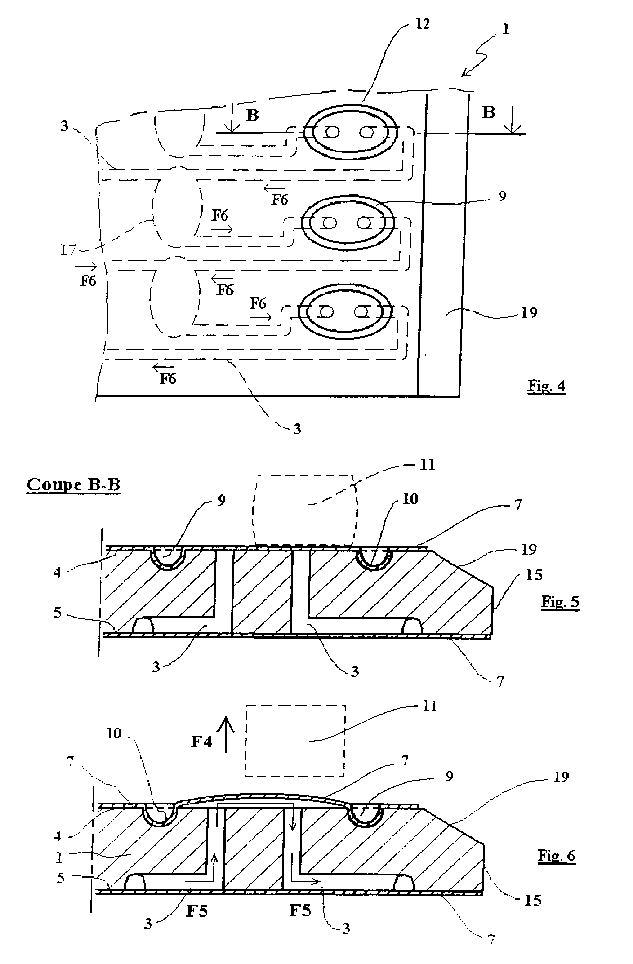

Par carte d'analyse, on entend un dispositif de préférence jetable comportant au moins une entrée, une sortie soit extérieure soit intérieure à la carte, un circuit fluidique entre l'entrée et la sortie et des moyens de contrôle du circuit fluidique comme par exemple des vannes. De nombreuses descriptions de vannes utilisables dans une carte d'analyse existent dans l'art antérieur comme par exemple dans le brevet US 5 856 174 ou les vannes décrites dans les demandes de brevets déposées par la demanderesse sous le numéro de dépôt FR 98/11383 et FR 99/07689 et intitulées " dispositif permettant des réactions, système de transfert entre dispositifs et procédé de mise en oeuvre d'un tel système " ou FR 99/08116 intitulée " vanne permettant de diriger un fluide dans une carte d'analyse ", et notamment illustrées aux figures 4 à 6. Des moyens de transfert de liquide comme des pompes ou des moyens de régulation de température peuvent être intégrés dans la carte d'analyse (voir par exemple WO 97/02357).

Par circuit fluidique, on entend un réseau de canaux et/ou compartiments qui permettent d'amener un liquide d'un point d'entrée de la carte à un point de sortie vers l'extérieur ou l'intérieur de la carte. Dans un mode particulier de réalisation de l'invention et notamment dans le cas d'analyse où le problème de contamination est important comme pour les analyses impliquant une réaction d'amplification enzymatique, les liquides qui rentrent dans la carte, n'en sortent pas ce qui permet d'empêcher le relarguage des acides nucléiques dans l'atmosphère (voir par exemple les demandes de brevet EP 0.381.501 ou WO 97/27324 qui proposent un appareil pour réaliser des amplification d'acides nucléiques utilisant la technologie " Polymerase Chain Reaction " (PCR)). Dans ce cas, le point de sortie de la carte d'analyse se trouve à l'intérieur de la carte comme par exemple un compartiment faisant office de poubelle.

En terme de réalisation, la carte d'analyse est obtenue par usinage d'une matière plastique technique, de préférence hydrophobe comme par exemple le polystyrène choc référence R540E de la société GOODFELLOW ou du polypropylène. Dans un mode de réalisation industriel, la carte est obtenue par moulage.

La nature du film flexible peut varier en fonction de la nature de la carte d'analyse et des fluides testés notamment pour des raisons de compatibilité. Par exemple, un film polymère TPX (polyméthylepentène) ou BOPP (polypropylènebi orienté) permet de réaliser des tests biologiques. La fixation de ces films peut être réalisée par collage (enduction de colle comme par exemple les colles silicones sur le film) ou par soudure. Un exemple de BOPP adhésif est fourni par la société BioMérieux Inc (St Louis, MO, USA) sous la référence 022004-2184.

Dans un premier mode particulier de réalisation de l'invention, l'on injecte dans la carte un fluide hydrophobe dans l'ensemble du réseau de ladite carte, préalablement au transfert de liquides biologiques.

Dans un deuxième mode particulier de réalisation de l'invention, entre l'étape d'injection du fluide hydrophobe et avant le transfert de liquide biologique dans la carte d'analyse, on élimine l'excès du fluide hydrophobe avec un deuxième fluide. En particulier, l'excès de fluide hydrophobe est éliminé en faisant circuler un gaz, préférentiellement de l'air.

Dans un autre mode de réalisation de l'invention, l'on injecte une quantité prédéterminée de fluide hydrophobe dans la carte suffisante pour revêtir tout ou partie du circuit fluidique afin d'éviter la formation de bulles et/ou de volumes morts. Par exemple, si la carte est utilisée dans un automate d'analyse, le fluide hydrophobe est injecté dans la carte dans une étape préalable et le ou les liquides biologiques sont introduits dans la carte après cette étape.

L'invention concerne également une carte d'analyse, comprenant au moins an circuit fluidique constituant un réseau de canaux et/ou de compartiments pour le transfert d'au moins un liquide biologique depuis au moins une entrée vers au moins une sortie, dans laquelle tout ou partie du réseau de la carte est revêtue d'un fluide hydrophobe remplissant les espaces capillaires formés par les angles présents sur le réseau de canaux et/ou compartiments de la carte et évitant la formation de bulles et/ou de volumes morts lors du transfert du liquide biologique. De préférence ladite carte est sensiblement plane et ladite carte est recouverte d'un film flexible. En particulier, ladite carte est de forme sensiblement parallépipède rectangle dont au moins une face est plane, au moins une face plane étant usinée ou moulée pour former le circuit fluidique et ladite carte est recouverte d'au moins un film flexible délimitant ledit circuit fluidique.

Les figures et exemple ci-joints n'ont aucun caractère limitatif Elles permettront de mieux comprendre l'invention.
La figure 1 représente une vue d'une des faces d'une carte d'analyse simplifiée comportant un seul chemin réactionnel.
La figure 2 représente une vue en coupe selon A-A de cette carte d'analyse avant la mise en oeuvre du procédé.
La figure 3 représente une vue en coupe identique de cette carte d'analyse après la mise en oeuvre du procédé.
La figure 4 représente une vue partielle d'une carte d'analyse comportant des vannes.
La figure 5 représente une vue en coupe selon B-B de la figure 4, lorsque la vanne est en position fermée.
La figure 6 représente une vue en coupe identique à la figure 5 lorsque la vanne est en position ouverte.

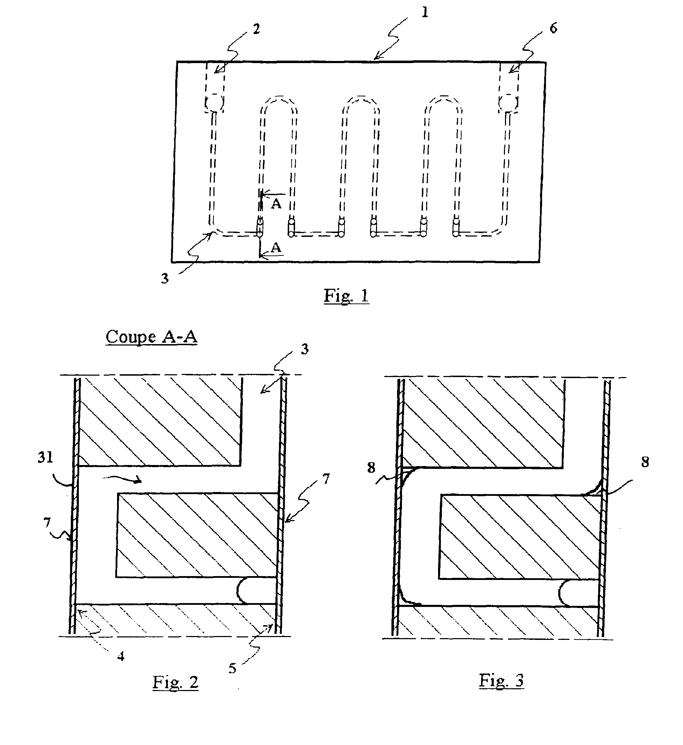

La figure 1 représente une carte d'analyse simplifiée 1 comportant une entrée 2 avec un circuit fluidique constitué d'un canal 3 vers une sortie 6.

Sur la coupe A-A de la figure 2, on voit la forme sensiblement plane de la carte d'analyse avec les faces inférieures 4 recouvertes d'un film flexible 7 et une face supérieure 5 recouverte d'un film flexible 7 Cette carte présente un canal traversant 31 qui génère des angles droits et donc des espaces capillaires sur la carte. Le liquide hydrophobe remplit ces espaces capillaires comme représenté sur la figure 3 en formant un arrondi 8 qui permet d'éviter la formation de bulles. Le procédé selon l'invention est particulièrement bien adapté dans le cas où la carte d'analyse est sensiblement plane avec au moins un canal traversant 31. En effet il est très difficile et donc coûteux de recréer l'arrondi au cours du processus de fabrication de la carte, notamment dans un processus de moulage où la pièce utilisée pour créer le canal doit pouvoir ressortir, ce qui a pour effet de créer une arête vive. Au niveau macroscopique tel que représenté sur ces figures, un angle droit est visible avec des arêtes rectilignes, mais bien entendu au niveau microscopique, les états de surface montrent des aspérités qui augmentent le phénomène de formation des bulles et justifient d'autant plus l'intérêt du procédé selon l'invention.

La figure 4 représente une vue de dessus d'une carte d'analyse comportant un circuit fluidique comportant des canaux des compartiments et des vannes. Dans ce cas, on remarque que chaque vanne 12 est constituée d'une petite surface plane située au même niveau que le reste de la surface plane de ladite carte 1 (voir également les figures 5 et 6), cette petite surface comprenant au moins un canal d'arrivée 3 et un canal de départ 3, le point d'intersection entre cette surface et les canaux 3 d'arrivée et de sortie du fluide étant au contact du film 7 comme cela est bien représenté sur la figure 5. Dans ce cas, la vanne est fermée, on remarque d'ailleurs sur la figure 5 un pion en élastomère 11 dont la fonction est de fermer la vanne. Ce pion est représenté schématiquement, afin de bien montrer que celui-ci bouche un des deux canaux 3. Bien entendu, le pion 11 peut boucher un canal ou l'autre canal ou les deux canaux 3. De plus, au niveau de la vanne, il peut y avoir plus de canaux c'est-à-dire trois et au-delà.

On remarque également que la carte comporte un certain nombre de compartiments 17. Les compartiments 17 sont reliés aux vannes par l'intermédiaire des canaux 3 et il est possible, mais cela n'est pas représenté sur la figure, que d'autres vannes et d'autres compartiments soient présents sur le reste de la carte 1 ce qui permet d'effectuer des mélanges entre deux réseaux de canaux 3 situés en parallèle et non plus en série. C'est ce qui est bien représenté sur cette figure 4 où l'on remarque que les mouvements fluidiques selon F6 au niveau de la carte 1 peuvent rapprocher deux liquides pour effectuer un mélange ou une analyse au niveau d'un compartiment 17. Un compartiment 17 peut dans le cas d'une carte fermée faire office de poubelle et donc de sortie pour le liquide hydrophobe.

On remarque sur les figures 5 et 6 maintenant, que sur la vanne supérieure 4 de la carte 1, est présent un film flexible 7. Ce film 7, dans ce cas particulier non autocollant, est donc soudé en 10 au niveau d'une rainure 9 périphérique à la vanne 2. Bien entendu, il est également possible d'avoir un deuxième film flexible 7 sur cette autre face. Les faces supérieure 4 et inférieure 5 sont reliées l'une à l'autre par un bord 15 où est présente, sur au moins un des côtés, comme cela est représenté sur les figures 4 à 6, une surface biseautée 19.

En fait, le fluide ou les fluides présents dans la carte d'analyse 1 sont mus au sein de cette carte 1 par l'intermédiaire d'une mise sous pression ou une dépression qui est créée. Le mouvement du fluide selon F5 de la figure 6 est réalisé en relevant le pion 11 selon F4, de sorte que le film flexible va pouvoir être déformé et le fluide pourra passer selon F5 comme cela est bien représenté.

### Exemple 1 :

Pour vérifier l'efficacité du procédé selon l'invention, on fabrique une carte d'analyse (dimensions 25 mm par 25 mm, épaisseur 3,5 mm) avec une entrée et une sortie conique de diamètre 2 mm selon la figure 1 par usinage d'une matière plastique technique hydrophobe en polystyrène choc référence R540E de la société GOODFELLOW. Le canal est obtenu par l'intermédiaire d'un tête fraisée de 0,5 mm de diamètre le long de la carte. La carte est recouverte d'un film adhésif BOPP fourni par la société BioMérieux Inc (St Louis, MO, USA) sous la référence 022004-2184. On injecte par dépression appliquée à la sortie de la carte 5 microlitres d'un tampon biologique contenant 10 mM Hepes pH 7,5 ; 150 mM NaCl ; 0,1% SDS et 1% de Foam Ban ( Antimousse vendu par la société Ultra Additives Inc, sous la référence MS-575). Sans traitement préalable de la carte, les 5 microlitres de tampon biologique sont transformés en une chaîne continue de mousse. Si l'on injecte préalablement à ce même liquide biologique une huile de type silicone de viscosité cinématique 50 centistokes (Dow Corning référence huile silicone 200 viscosité 50 cs, lot n° X 2034633) dont l'excès dans la carte est éliminé par aspiration, le liquide circule dans la carte sans mousse ce qui permet de contrôler à tout moment sa position dans la carte. Le même résultat est obtenu avec une huile de viscosité cinématique 10 centistokes (Dow Corning , référence huile silicone 200 viscosité 10 cs, lot n° XZ034181) et un tampon biologique contenant 75 mM Tris pH 7,7 ; 2,5 % Triton X100 ; % Glycérol et 1% de Foam Ban. Bien que dans tous les cas, le liquide biologique contienne un antimousse à une concentration élevée c'est à dire plus de 0,5%, le problème de mousse reste important dans ce type de consommable et la mise en oeuvre du procédé selon l'invention nécessaire.

Par contre avec une huile de même nature de viscosité cinématique 128 centistokes, la quantité d'huile piégée dans le circuit est trop importante et le liquide biologique ne peut circuler. La fonction du liquide hydrophobe est donc bien de remplir les espaces capillaires et uniquement les espaces capillaires pour empêcher la formation de mousse et la formation de volumes morts mais sans gêner la circulation ultérieure des liquides biologiques.

La carte préremplie est stable au moins 15 jours à température ambiante.

La même efficacité de l'huile hydrophobe pour éviter le problème des bulles est obtenue avec une carte d'analyse telle que représentée à la figure 4 et qui présente de par la disposition de son circuit fluidique de nombreux espaces capillaires et arêtes vives à 90° pouvant générer des bulles dans les liquides biologiques.

### Exemple 2 :

Pour vérifier la compatibilité de l'huile avec les réactions d'amplification enzymatique, une réaction d'amplification PCR est effectuée sur une gamme d'ARN génomique purifié de poliovirus type 3 (de 10 à 10⁶ copies), selon les conditions du kit SuperScript^{™} One-Step^{™} RT-PCR System (Life Technologies), et en utilisant les amorces d'amplification décrites par P.M. Regan et A. B. Margolin (J. Virological Methods, 64, p 65-72, 1997). Pour vérifier l'impact de l'huile, 20 microlitres d'huile (Dow Corning 50cs) sont additionnés à 50 microlitres de la réaction PCR. Des tubes sans huile sont préparés comme contrôle. Après réaction, les produits d'amplification sont analysés par gel d'électrophorèse sur gel d'agarose 2% et colorés au bromure d'éthidium. Les résultats montrent la présence de la bande attendue de 195 paires de base avec une limite de sensibilité identique de 10 copies de cible pour le tube avec huile et pour le tube sans huile. L'huile n'a donc pas d'effet inhibiteur sur la réaction d'amplification. Il est donc possible de réaliser ce type de réaction biologique dans une carte dont les espaces capillaires sont remplis par un fluide hydrophobe comme une huile silylée ( de type silicone) sans affecter la sensibilité de l'analyse biologique.

## Revendications

1. Procédé de mise en oeuvre d'une carte d'analyse (1) comportant au moins un circuit fluidique, constituant un réseau de canaux (3) et/ou de compartiments (17), pour le transfert d'au moins un liquide biologique depuis au moins une entrée (2) vers au moins une sortie (6, 17) **caractérisé par le fait que** l'on injecte dans ladite carte un fluide hydrophobe dans tout ou partie du réseau de ladite carte, préalablement au transfert du ou des liquides biologiques, ledit fluide hydrophobe remplissant les espaces capillaires formés par les angles du réseau de canaux et/ou compartiments de la carte et évitant la formation de bulles et/ou de volumes morts lors du transfert du liquide biologique.

2. Procédé, selon la revendication 1, **caractérisé par le fait que** l'on injecte dans la carte un fluide hydrophobe dans l'ensemble du réseau de ladite carte, préalablement au transfert de liquides biologiques.

3. Procédé, selon l'une quelconque des revendications 1 ou 2, **caractérisé par le fait qu'**entre l'étape d'injection du fluide hydrophobe et avant le transfert de liquide biologique dans la carte d'analyse, on élimine l'excès du fluide hydrophobe avec un deuxième fluide.

4. Procédé, selon la revendication 3, **caractérisé par le fait que** le deuxième fluide est un gaz, préférentiellement de l'air.

5. Procédé, selon l'une quelconque des revendications 1 ou 2, **caractérisé par le fait que** l'on injecte une quantité prédéterminée de fluide hydrophobe dans la carte suffisante pour revêtir tout ou partie du circuit fluidique afin d'éviter la formation de bulles et/ou de volumes morts.

6. Procédé, selon l'une quelconque des revendications 1 à 5, **caractérisé par le fait que** le fluide hydrophobe possède une viscosité cinématique comprise entre 1 et 100 centistokes à 40°C, préférentiellement entre 4 et 50 centistokes à 40 °C.

7. Procédé, selon l'une quelconque des revendications 1 à 6, **caractérisé par le fait que** le fluide hydrophobe est une huile silylée.

8. Carte d'analyse (1) comprenant au moins un circuit fluidique constituant un réseau de canaux (3) et/ou de compartiments (17) pour le transfert d'au moins un liquide biologique depuis au moins une entrée (2) vers au moins une sortie (6, 17) **caractérisée par le fait que** tout ou partie du réseau de la carte est revêtue d'un fluide hydrophobe remplissant les espaces capillaires formés par les angles présents sur le réseau de canaux et/ou compartiments de la carte et évitant la formation de bulles et/ou de volumes morts lors du transfert du liquide biologique.

9. Carte d'analyse, selon la revendication 8, **caractérisée par le fait que** le fluide hydrophobe possède une viscosité cinématique comprise entre 1 et 100 centistokes à 40°C, préférentiellement entre 4 et 50 centistokes à 40 °C.

10. Carte d'analyse, selon l'une quelconque des revendications 8 ou 9, **caractérisée par le fait que** ladite carte est de forme sensiblement parallépipède rectangle dont au moins une face est plane, au moins une face plane étant usinée ou moulée pour former le circuit fluidique et ladite carte est recouverte d'au moins un film flexible délimitant ledit circuit fluidique.

## Claims

1. A method for using a test card (1) comprising at least one fluid circuit, constituting a network of channels (3) and/or of compartments (17), for transferring at least one biological liquid from at least one inlet (2) to at least one outlet (6, 17), **characterized in that** a hydrophobic fluid is injected into said card, into all or part of the network of said card, prior to the transfer of the biological liquid(s), said hydrophobic fluid filling the capillary spaces formed by the angles of the network of channels and/or of compartments of the card and avoiding the formation of bubbles and/or of dead volumes during the transfer of the biological liquid.

2. The method as claimed in claim 1, **characterized in that** a hydrophobic fluid is injected into the card, into the entire network of said card, prior to the transfer of biological liquids.

3. The method as claimed in either one of claims 1 and 2, **characterized in that**, between the step of injecting the hydrophobic fluid and before the transfer of biological liquid in the test card, the excess hydrophobic fluid is removed with a second fluid.

4. The method as claimed in claim 3, **characterized in that** the second fluid is a gas, preferably air.

5. The method as claimed in either one of claims 1 and 2, **characterized in that** a predetermined amount of hydrophobic fluid is injected into the card, this amount being sufficient to coat all or part of the fluid circuit in order to avoid the formation of bubbles and/or dead volumes.

6. The method as claimed in any one of claims 1 to 5, **characterized in that** the hydrophobic fluid has a kinematic viscosity of between 1 and 100 centistokes at 40°C, preferably between 4 and 50 centistokes at 40°C.

7. The method as claimed in any one of claims 1 to 6, **characterized in that** the hydrophobic fluid is a silylated oil.

8. A test card (1) comprising at least one fluid circuit constituting a network of channels (3) and/or of compartments (17) for transferring at least one biological liquid from at least one inlet (2) to at least one outlet (6, 17), **characterized in that** all or part of the network of the card is coated with a hydrophobic fluid filling the capillary spaces formed by the angles present on the network of channels and/or of compartments of the card and avoiding the formation of bubbles and/or of dead volumes during the transfer of the biological liquid.

9. The test card as claimed in claim 8, **characterized in that** the hydrophobic fluid has a kinematic viscosity of between 1 and 100 centistokes at 40°C, preferably between 4 and 50 centistokes at 40°C.

10. The test card as claimed in either one of claims 8 and 9, **characterized in that** said card is substantially in the shape of a right-angled parallelepiped, at least one face of which is flat, at least one flat face being machined or molded so as to form the fluid circuit, and said card is covered with at least one flexible film delimiting said fluid circuit.

## Patentansprüche

1. Verfahren zur Implementierung einer Analysenkarte (1) umfassend mindestens einen Fluidkreislauf, der ein Netz von Kanälen (3) und/oder von Kompartimenten (17) darstellt, für den Transfer von mindestens einer biologischen Flüssigkeit von mindestens einem Einlaß (2) zu mindestens einem Auslaß (6, 17), **dadurch gekennzeichnet, daß** man in diese Karte vor dem Transfer von einer oder mehreren biologischen Flüssigkeiten in das ganze Netz dieser Karte oder einen Teil dieses Netzes ein hydrophobes Fluid einspritzt, wobei das hydrophobe Fluid die von den Winkeln des Netzes von Kanälen und/oder Kompartimenten der Karte gebildeten Kapillarräume ausfüllt, wobei die Bildung von Blasen und/oder Toträumen bei dem Transfer der biologischen Flüssigkeit vermieden wird.

2. Verfahren nach Anspruch 1, **dadurch gekennzeichnet, daß** man in die Karte vor dem Transfer von biologischen Flüssigkeiten ein hydrophobes Fluid in die Gesamtheit des Netzes der Karte einspritzt.

3. Verfahren nach einem der Ansprüche 1 oder 2, **dadurch gekennzeichnet, daß** man zwischen dem Schritt des Einspritzens des hydrophoben Fluids und vor dem Transfer der biologischen Flüssigkeit in die Analysenkarte den Überschuß an hydrophobem Fluid mit einem zweiten Fluid entfernt.

4. Verfahren nach Anspruch 3, **dadurch gekennzeichnet, daß** es sich bei dem zweiten Fluid um ein Gas, vorzugsweise um Luft, handelt.

5. Verfahren nach einem der Ansprüche 1 oder 2, **dadurch gekennzeichnet, daß** man in die Karte eine vorbestimmte Menge an hydrophobem Fluid einspritzt, die ausreicht, um den gesamten Fluidkreislauf oder einen Teil davon zu beschichten, so daß die Bildung von Blasen und/oder Toträumen vermieden wird.

6. Verfahren nach einem der Ansprüche 1 bis 5, **dadurch gekennzeichnet, daß** das hydrophobe Fluid eine kinematische Viskosität zwischen 1 und 100 Centistoke bei 40°C, vorzugsweise zwischen 4 und 50 Centistoke bei 40°C, aufweist.

7. Verfahren nach einem der Ansprüche 1 bis 6, **dadurch gekennzeichnet, daß** es sich bei dem hydrophoben Fluid um ein silyliertes Öl handelt.

8. Analysenkarte (1) umfassend mindestens einen Fluidkreislauf, der ein Netz von Kanälen (3) und/oder von Kompartimenten (17) darstellt, für den Transfer von mindestens einer biologischen Flüssigkeit von mindestens einem Einlaß (2) zu mindestens einem Auslaß (6, 17), **dadurch gekennzeichnet, daß** das gesamte Netz der Karte oder ein Teil davon mit einem hydrophoben Fluid beschichtet ist, das die von den Winkeln des Netzes von Kanälen und/oder Kompartimenten der Karte gebildeten Kapillarräume ausfüllt, wobei die Bildung von Blasen und/oder Toträumen bei dem Transfer der biologischen Flüssigkeit vermieden wird.

9. Analysenkarte nach Anspruch 8, **dadurch gekennzeichnet, daß** das hydrophobe Fluid eine kinematische Viskosität zwischen 1 und 100 Centistoke bei 40°C, vorzugsweise zwischen 4 und 50 Centistoke bei 40°C, aufweist.

10. Analysenkarte nach einem der Ansprüche 8 oder 9, **dadurch gekennzeichnet, daß** diese Karte im wesentlichen die Form eines rechtwinkligen Parallelepipeds aufweist, bei dem mindestens eine Seite flach ist, wobei mindestens eine flache Seite maschinell bearbeitet oder geformt ist, um den Fluidkreislauf zu bilden und wobei diese Karte von mindestens einem flexiblen Film, der diesen Fluidkreislauf begrenzt, bedeckt ist.
